# EUROPEAN PATENT APPLICATION

(11) **EP 1 962 194 A1**
(43) Date of publication of application: **27.08.2008**
(21) Application number: 07102988.8
(22) Date of filing: 23.02.2007
(51) Int. Cl.: G06F 11/36

(54) **A method and a system for dynamic probe authentication for test and monitoring of software**

(71) Applicant: TELEFONAKTIEBOLAGET LM ERICSSON (publ), 164 83 Stockholm (SE)
(72) Inventor: Nilsson, Johan, 25374, Helsingborg (SE); Östman, Patrik, 212 14, Malmö (SE)
(74) Representative: Bratt, Hanna Catharina

(57) **Abstract**

The present invention is related to a method, a system and a computer readable device for authenticated configuration used for configuration of software probes injected in software modules to be tested in an electrical mobile device. The invention will create and make use of a configuration file by inserting an authentication signature, Probe Identifications (PID) and Probe Locations (PL).

## Description

### TECHNICAL FIELD

The invention is related to testing of software and, in particular, a method and a system for dynamic probe authentication.

### BACKGROUND

Among developers of software, one of the most important requirements is for the software to be reliable. Reliability refers to the ability of software to operate without failure for a specified amount of time in a specified environment. To ensure a sufficiently high level of reliability, software must be thoroughly tested and debugged prior to release. Usually, the entire software program as a whole is tested, as well as the individual functional components (e.g. function calls, subroutines) that make up the software program. Typically, test vectors are generated containing a series of values for the variables that are required by the software and/or one or more functional components. The variable values are chosen to represent various types of usage conditions and environments in which the software is intended to be run. The test vectors are then applied to the software and/or the one or more functional components, and the variable values are observed and recorded.

One type of testing that is often performed is called regression analysis, or sometimes verification testing. Regression analysis involves the selective retesting of software that has been modified in order to fix known problems. The selective retesting is performed in order to ensure that the identified problems have been fixed, and that no other previously working functional components have failed as a result of the reparations.

This type of testing is basically a quality control measure to ensure that the modified code still complies with its specified requirements and that any unmodified code has not been affected by the maintenance activity.

An important feature in regression analysis specifically and in software testing in general is the ability to observe the variable values resulting from the test vectors. Early attempts to observe the variable values of software and/or the functional components thereof involved manually setting break points and other traps in the source code itself. More recently, software development tools such as Code Composer Studio^{™} from Texas Instruments and LabVIEW^{™} from National Instruments include software probes that may be inserted into the code under test. The software probes allow the variables in the code under test to be observed in real-time as the software is executed. These latter solutions, however, are based only on getting the variable values out from the code, under test (e.g., so they can be analyzed). They do not allow the variable values to be changed during the execution of the software. In other words, these existing software probes are only one-way or unidirectional probes in that the data is allowed to flow only from the code under test to the test system. They do not allow the direction of data transfer to be reversed so that data flows from the test system into the code under test.

Other probes are bi-directional in that the probes allow data to flow from the code under test to the test system and vice versa. An example of a bi-directional probe may be found in commonly-owned U.S. Application Serial No. 10/428733, entitled "BI-DIRECTIONAL PROBING OF SOFTWARE," filed on May 1, 2003.

In existing solutions, however, both unidirectional and bi-directional probes operate in static mode, meaning that the probes need to be determined during the compile time of the software under test. If the probe is not introduced during the compile time, the only way to introduce the probe is to rebuild the software under test, which is undesirable. Also, even while a probe is inactive, it still consumes a small amount of memory, which may add up to a significant amount of memory for an entire system.

A dynamic probing technique providing the possibility to install probes into the software under test during run-time instead of compile time is earlier known from PCT/EP2006/066620. The probes can be introduced and removed as needed and only installed probes consume memory. The dynamic probing technique may be implemented in any test system.

Said probes are listed in a number of tables. As the number of probes in software to be tested increases, the manually handling and updating of such a table will rapidly become laborious and slow. It takes a lot of time to manually generate said tables and/or change the content in one or more tables. It is also desirable to run a test of a certain section of an application software without having all probes activated. If all probes are activated during each test run, a lot of unnecessary data will be generated. Further, the platform developers, regards the information generated by certain probes as secret, and therefore wants to control the accessibility to said probes.

### SUMMARY

The object of the present invention is to solve to the above discussed shortcomings with prior art.

One embodiment of the present invention is a method for authenticated configuration, used for configuration of software probes injected in software modules to be tested in an electrical mobile device. The method comprises at least the step of creating, signing and issuing at least one configuration file by inserting an authentication signature, Probe Identifications (PID) and Probe Locations (PL).

Further one embodiment is a test system for authenticated configuration used for configuration of software probes injected in software modules to be tested in an electrical mobile device which is connected to test control equipment of the system. The test equipment is adapted to create, sign and issue, by inserting an authentication signature, Probe Identifications (PID) and Probe Locations (PL) into said configuration file.

Further one embodiment of the invention is a computer readable device adapted to store digital data and software instructions for performing any one of the steps of the above described method.

### BRIEF DESCRIPTION OF THE DRAWINGS

Figure 1 is a block diagram illustrating an embodiment of the present invention.
Figure 2 is a flowchart illustrating a method for loading of a configuration file into the device under test.
Figure 3 is a flowchart illustrating a method for running test sessions using a configuration file into the device under test.

### DETAILED DESCRIPTION

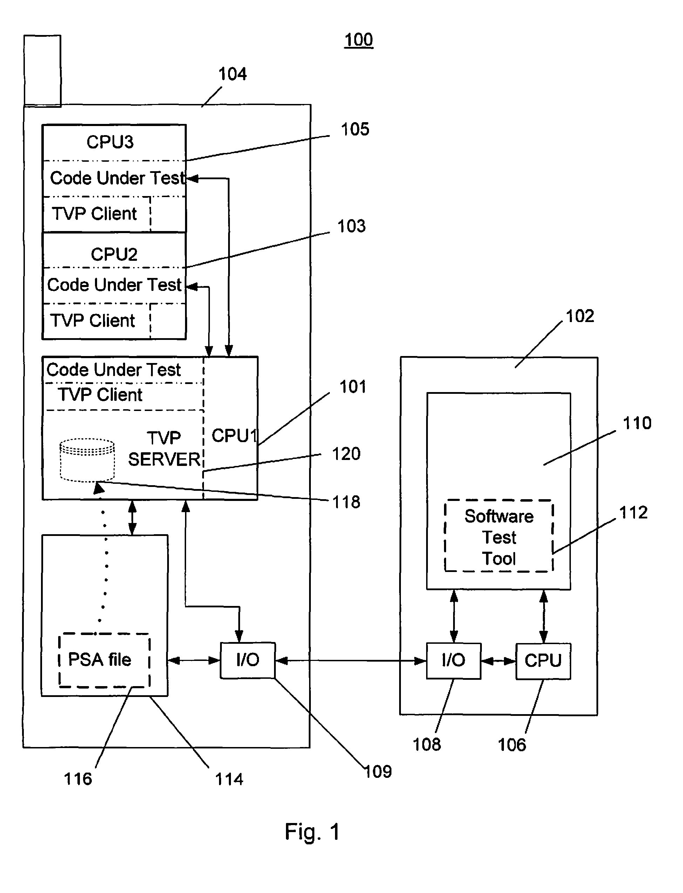

Figure 1 shows a test system 100 for implementing the invention. The test system 100 includes a test control equipment 102 and a device under test 104 that are in communication with each other. The test control equipment 102 is a typical computer that has a number of functional components, including a CPU 106, an input/output interface unit 108, and a storage unit 110. These components are well-known to people of ordinary skill in the computer art and will therefore be described only briefly here. The CPU 106 handles the execution of all software programs on the test control equipment 102, including the operating system and any software running thereon. The interface unit 108 serves as an interface the test control equipment 102 to the device under test 104, as well as any input/output devices (e.g., keyboard, mouse, display unit, printer, etc.) connected thereto. The interface unit 108 is able to handle the communication between the test control equipment 102 and the device under test 104 by using any protocol for the purpose, e.g. the Testing and Verification Protocol TVP. The TVP is capable of controlling the probing of any software being tested using the software test tool 112, and analyzing the data being probed. Specifically, the TVP allows data to be captured from the code under test, injected into the code under test, or both, as determined by a user. This makes it easier and more convenient for the user to monitor and test the operation and reliability of the code under test. The storage unit 110 provides temporary storage (e.g. RAM) and/or long-term storage (e.g. hard drive) for any software programs and/or data that may be needed for the execution of the operating system and the software running on the test control equipment 102.

Stored in the storage unit 110 are a number of software applications, including a software test tool 112. The software test tool 112 operates in the same way and has many of the same features as existing software development tools such as Code Composer Studio^{™} from Texas Instruments and LabVIEW^{™} from National Instruments, or other similar software development tools.

In the present embodiment the code under test, including the probe instructions, is executed on a separate unit, namely the device under test 104, which is in communication with the test control equipment 102. The device under test 104, like the test control equipment 102, comprises processing means that has a number of functional components, including at least one CPU , an input/output interface unit 109, and at least one storage unit 114. The components of the device under test 104 are similar in function to their counterparts in the test control equipment 102 and will therefore not be described here. The main point is that the code under test, including the probed source code and the probe instructions and implementation, is stored and executed separately from the test control equipment 102.

The device under test 104, exemplified by an electrical mobile device, such as a mobile radio terminal platform, comprises at least one Central Processor Unit CPU. A platform comprises both the software (SW) and the hardware (HW) solution in which the software (SW) is processed, stored, etc.

In the illustrated embodiment of the platform is a Central Processing Unit configuration comprising three CPUs described. The CPU configuration comprises one Access CPU, CPU1 101 and two Application CPUs (CPU), a first Application CPU, CPU2 103, and a second Application CPU, CPU3 105. The described configuration is only an example and should therefore not be regarded as a limitation of the scope of the invention. The invention is applicable in connection with any configuration of processing means, such as CPU, microprocessor, etc, A person skilled in the art will be able to realize that the present invention is applicable in other devices comprising one or more Central Processing Units, CPUs processing software code instructions.

Each CPU is connected to a corresponding Storage Unit, which may contain software instructions, such as code under test, which may be grouped into software modules. Probes may be located between and/or insaid modules for gathering information that assists the software developer in enhancing application performance.

The CPU 1 101 is connected to a TVP client in each of CPU 1 103 and CPU2 105, respectively.

Each CPU 103 and 105 is possible to run separately from the other CPU(-s), but under individual control of the CPU1.

The CPU 1 101 is communicating with the test control equipment 102 via the input/output interface 109 and a suitable protocol, such as TVP. Further, the CPU 101 is connected to a Storage Unit 114, which may comprise Software to be tested, data, files etc. The Storage Unit 114 is connected to the I/O-interface 109 for providing possibility for the test control equipment 102 to directly access said storage unit.

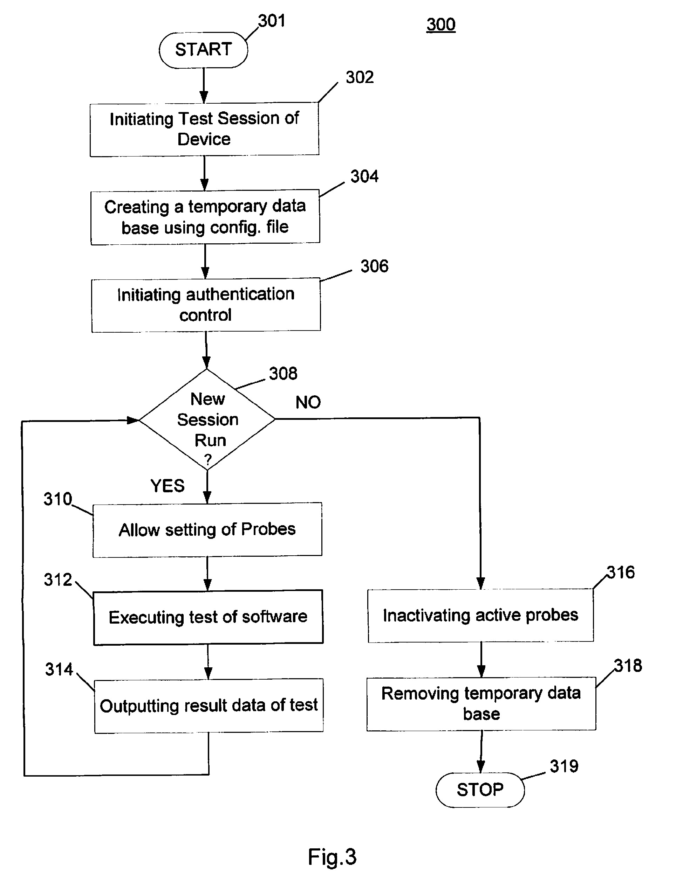

The CPU 101 is adapted to execute and run a TVP server 120. Said TVP server 120 will be able to handle a temporary data base 118 that is created during the initiation of a test session. Said data base will be described in more detail in connection to the test method described in figure 3.

As discussed above in this description, in connection with the presentation of the problem to be solved by the present invention, it takes a lot of time to manually generate said tables and/or change the content in one or more tables. It is also desirable to run a test of a certain section of an application software without having all probes activated. If all probes are activated during each test run, a lot of unnecessary data will be generated, which may confuse or irritate people analyzing the log list of the test run. Further, the platform manufacturer, or a subsequent developer, regards the information generated by certain probes as secret, and therefore wants to control the accessibility to said probes by an authorization process.

The inventive solution to the discussed problems is to load and store a configuration file comprising certain probe and authorization information in a storage of the Test and Verification Platform (TVP). Said file is hereafter denoted as configuration file (PSA; the Probe Setting and Authorization file).

When a test session is started, the test control equipment 102 opens the session by accessing the PSA file. When the session is opened, TVP traverses the PSA file and creates an internal virtual database 118 containing available probes. Said internal virtual database is temporary and will be deleted when the session is closed. The internal virtual database will provide the possibility to enable/activate or disable customer allowed probes in the software to be tested. The database will verify if the user/customer/client is allowed to activate a certain probe and to determine the location of the probe. If the probe is located in several CPUs, hereafter sometimes denoted as a node, a user of the test system can either chose which CPU of the listed ones or activate all the CPUs where the probe is located.

If the user sets the mode of a probe to inject, the node must be specified if the probe exists in several nodes.

The PSA file may be written in different formats, e.g. the language XML, extensible Markup Language. The file is preferably including following parameters:
- authentication signature;
- Probe Identifications (PID);
- Probe Locations (PL).

A program structure may be designed as follows:

```
 <License>
    <Probes>
       <Probeids></Probeids>
       <Nodes></Nodes>
       <Inject></Inject>
    </Probes>
 </License>
```

The section <Probeids> contains one or more probe identity PID that are located in one or several nodes, i.e. CPUs.

The section <Nodes> contains the probe locations PL and informs in which CPUs the probes are located.

The section <Inject> contains the authentication signatures and tells if the probes are allowed to be used in inject mode.

The above described technique allows probes to be inserted in real time, which gives the person performing the test flexibility to insert the probes when they are needed. Also, because the probes are removable, memory can be saved by removing inactive probes or after a probe has performed the desired test.

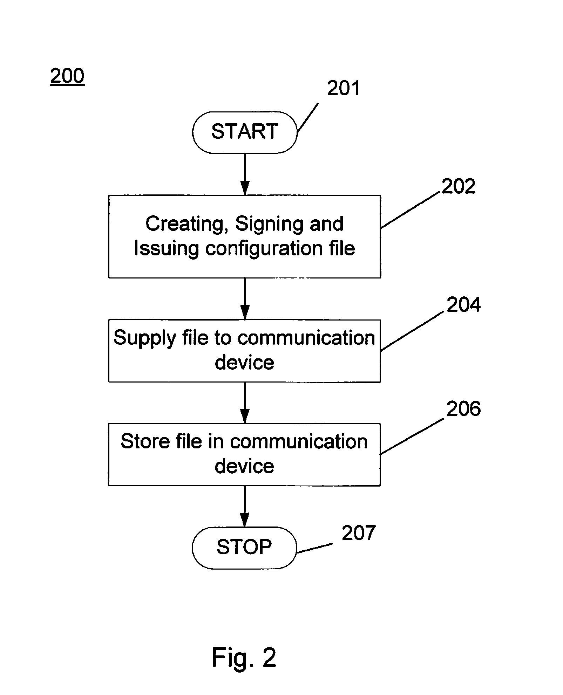

In figure 2, a flowchart illustrating an embodiment of the creating and loading process of a configuration file according to the invention into the device under test is presented.

The first step 202 of the process 200 is to creating, signing and issuing at least one configuration file PSA by inserting an authentication signature, Probe Identifications (PID) and Probe Locations (PL). When the configuration file PSA has been issued it will be supplied, step 204, to the device under test 104, e.g. an electrical mobile device, such as a PDA (Personal Digital Assistant), or a communication device, or a mobile radio platform, etc. In the device 104, said configuration file PSA 116 will be stored in a storage 114 connected to CPU 101. The loading process is stopped, step 207. The file PSA is stored here until it will be opened and used for the test sessions.

In figure 3, an embodiment of the invented method 300 for running test sessions using a configuration file PSA into the device under test 104.

When the test control equipment 102 is up started (step 301), the user/customer will be able to initiate a test session of the device under test, in this example an electrical mobile device. When the step 302 has been performed, the method continues with the next step 304, the step of creating, by means of information contained within the configuration file PSA, in the device 104, a temporary parameter access database 118 comprising access parameters for accessing a at least one dynamic probe inserted in the software to be tested. Thereafter, the step of initiating control of authentication, step 306, for setting the dynamic probes is performed. Said step 306 also comprises authentication confirmation against parameter access database allowing setting of dynamic probes.

In step 310, the user will be able to set the allowed dynamic probes of the code (software SW) under test in active or inactivated state.

When all the wanted dynamic probes of interest have been set, the executing of the test of the software is run, step 312, until the session is finished. Then, in step 314, the outputting of the result is performed.

A test session may comprise a number of sub-test sessions which are executed in a series of session runs. The user may want to change software modules to be tested between each session run. Therefore, in step 308, the user will be provided the opportunity to continue a new test session with new dynamic probes set to activated and used probes set to deactivated. If a new test session is to be performed - "yes"-condition is true, the test loop, comprising steps 310, 312, and 314, is run through once again. If the test run is finished, the "No"-condition" is fulfilled, and the step of inactivating the set of active probes, step 316, and the step of removing the temporary parameter access database 118, step 318, will be performed. The test session is thereafter stopped, step 319. The "cleaning-up steps", steps 316 and 318, will ensure that all data and data files created, except the PSA file, are deleted and not left in the device under test 104. The PSA file will remain as it was loaded in a storage unit 114 of the device under test 104 until new test sessions are to be executed.

Therefore, with reference to figure 1, the invented test system 100 for authenticated configuration used for configuration of software probes injected in software modules to be tested in a device under test 104 which is connected to test control equipment 102 of the system comprises means for creating, authenticating and issuing by inserting an authentication signature, Probe Identifications (PID) and Probe Locations (PL) into said configuration file. Said means may be realised as computer readable software instructions. Further, the test control equipment is designed to comprise supplying means , such as In/Out interfaces 108, 109 capable of supplying the at least one authenticated and issued configuration file to the device 104.

The test control equipment 102 comprises processing means 106 for creating, by means of information contained within the configuration file, in the device 104, a temporary parameter access database 118 comprising access parameters for accessing a at least one dynamic probe inserted in the software to be tested.

The system 100 further comprises processing means 101, 103, 105 and 106 for initiating control authentication for allowing setting of the dynamic probes and when rights confirmed against parameter access database setting of dynamic probes.

The system 100 according one embodiment of the invention comprises control means 101, 103, 105 and 106 adapted to execute the test of the software to be tested and adapted to output result data from the test.

The system 100 according one embodiment of the invention further comprises control means 101, 103, 105 and 106 adapted to inactivate at least one of the probes of the set active probes, and adapted to remove the temporary parameter access database.

The invented method may be implemented as computer readable software code stored an a computer readable device adapted to store digital data and software instructions for performing any one of the steps of the invented, wherein a configuration file is stored, said file comprising at least one authentication signature, probe identification (PID) and probe location (PL).

It should be emphasized that the term comprises/comprising, when used in this specification, is taken to specify the presence of stated features, integers, steps, or components, but does not preclude the presence or addition of one or more other features, integers, steps, components, or groups thereof.

While particular embodiments and applications of the present invention have been illustrated and described, it is to be understood that the invention is not limited to the precise construction and compositions disclosed herein, and that modifications and is variations may be made to the foregoing without departing from the scope of the invention as defined in the appended claims.

## Claims

1. A method for authenticated configuration used for configuration of software probes injected in software modules to be tested in an electrical mobile device (104), ***characterized in* that** the method comprises at least the following step:
- creating, signing and issuing (202) at least one configuration file (116) by inserting an authentication signature, Probe Identifications (PID) and Probe Locations (PL).

2. The method according to claim 1, further comprising the step of supplying (203) the at least one signed and issued configuration file to the electrical mobile device.

3. The method according to one of claims 1 or 2, further comprising the step of creating, by means of information contained within the configuration file (116), in the electrical mobile device (104), a temporary parameter access database (118) comprising access parameters for accessing a at least one dynamic probe inserted in the software to be tested.

4. The method according to one of claims 1 - 3, further comprising the step of initiating control of authentication (306) for setting the dynamic probes and when authentication confirmed against parameter access database (118) allowing setting of dynamic probes.

5. The method according to one of the preceding claims, further comprising the steps of :
- executing the test of the software to be tested (312);
- outputting result data from the test (314).

6. The method according to one of claims 3-5, further comprising the steps of :
- inactivating the set of active probes (316);
- removing the temporary parameter access database (318).

7. The method according to one of claims 1-6, wherein the electrical mobile device (104) is a PDA (Personal Digital Assistant) or a communication device or mobile radio platform.

8. A test system (100) for authenticated configuration used for configuration of software probes injected in software modules to be tested in an electrical mobile device (104) which is connected to test control equipment (102) of the system, ***characterized in* that** the test control equipment (102) adapted to create, sign and issue by inserting an authentication signature, Probe Identifications (PID) and Probe Locations (PL) into said configuration file.

9. The system according to claim 8, wherein the test control equipment (102) is designed to comprise supplying means (106,108) capable of supplying the at least one signed and issued configuration file (116) to the electrical mobile device (104).

10. The system according to one of claims 8 or 9, wherein the test control equipment (102) comprises processing means (106) for creating, by means of information contained within the configuration file (114), in the electrical mobile device (104), a temporary parameter access database(118) comprising access parameters for accessing a at least one dynamic probe inserted in the software to be tested.

11. The system according to claim 10, further comprising processing means (101) for initiating control authentication for allowing setting of the dynamic probes and when rights confirmed against parameter access database (116) setting of dynamic probes.

12. The system according to one of claims 8-11, further comprising control means (101,103,105) adapted to execute the test of the software to be tested and adapted to output result data from the test.

13. The system according to one of claims 10 -12, further comprising control means (101) adapted to inactivate at least one of the probes of the set active probes, and adapted to remove the temporary parameter access database (116).

14. The system according to one of claims 8-13, wherein the electrical mobile device (104) is a PDA (Personal Digital Assistant) or a communication device or mobile radio platform.

15. A computer readable device (116) adapted to store digital data and software instructions for performing any one of the steps of the method claims 1-7, wherein a configuration file (114) is stored, said file comprising at least one authentication signature, probe identification (PID) and probe location (PL).
